# FASCICULE DE BREVET EUROPEEN

(11) **EP 2 700 837 B1**
(45) Date de publication et mention de la délivrance du brevet: **04.03.2015**
(21) Numéro de dépôt: 13177688.2
(22) Date de dépôt: 23.07.2013
(51) Int. Cl.: F16D 48/06

(54) **Procédé de positionnement d'un plateau de pression d'un embrayage**
Positionierungsverfahren einer Kupplungsdruckplatte
Method of positioning a clutch pressure plate

(30) Priorité: 21.08.2012 FR 1257915
(43) Date de publication de la demande: 26.02.2014
(73) Titulaire: Valeo Embrayages, 80009 Amiens Cedex 2 (FR)
(72) Inventeur: Maurel, Hervé, 80000 AMIENS (FR); Randriazanamparany, Vévé Roland, 80470 AILLY SUR SOMME (FR); Taccoen, Didier, 80000 AMIENS (FR)
(74) Mandataire: Tran, Chi-Hai

(56) Documents cités:
- EP-A1- 1 589 248
- EP-A2- 1 375 950
- DE-A1-102007 044 037
- DE-A1-102009 010 136

## Description

La présente invention concerne un procédé de positionnement d'un plateau de pression d'un embrayage par rapport à un plateau de réaction de l'embrayage.

L'embrayage est notamment destiné à équiper un véhicule automobile et peut être plus particulièrement un double embrayage.

Un double embrayage permet de coupler alternativement l'arbre du moteur du véhicule avec deux arbres coaxiaux d'entrée d'une boîte de vitesses, qui peut être du type robotisé.

Ainsi, un double embrayage permet de changer de rapport de vitesses tout en maintenant la transmission d'un couple moteur aux roues du véhicule. En effet, les deux embrayages sont associés respectivement à des rapports de vitesses pairs et impairs. Lors d'un changement de rapport de vitesses, un premier embrayage est débrayé alors que le second embrayage est embrayé, si bien que le couple moteur est transféré progressivement du premier au second embrayage.

Chaque embrayage comprend un mécanisme comportant un diaphragme annulaire appliqué sur un plateau de pression solidaire en rotation du couvercle et de l'arbre du moteur. Chaque diaphragme est déplaçable au moyen d'une butée d'embrayage correspondante, entre une position de repos et une position active. Selon le type d'embrayage, la position active du diaphragme correspond à un couplage ou à un découplage des arbres du moteur et de la boîte de vitesses et la position de repos du diaphragme correspond à un découplage ou un couplage de ces arbres. On parle alors respectivement d'embrayage normalement ouvert ou d'embrayage normalement fermé.

La butée d'embrayage est commandée par un actionneur piloté par un calculateur électronique afin d'exercer une force prédéterminée sur le diaphragme et de le déplacer sur une distance donnée.

Le plateau de pression de chaque embrayage, sollicité par le diaphragme correspondant, est destiné à serrer un disque de friction sur un plateau de réaction correspondant. Un plateau de réaction peut être prévu pour chaque embrayage. En variante, on utilise un seul plateau de réaction commun aux deux embrayages, monté entre les deux disques de friction.

Chaque disque de friction est lié en rotation à un arbre d'entrée de la boîte de vitesses et chaque plateau de réaction est solidaire en rotation d'un volant lié à l'arbre moteur. Ainsi, le serrage d'un disque de friction entre les plateaux de pression et de réaction correspondants permet la transmission d'un couple entre l'arbre moteur et un arbre de la boîte de vitesses associée.

L'utilisation des embrayages provoque une usure des garnitures de friction des disques de friction ainsi que des contre-matériaux des plateaux de pression et de réaction associés. Ceci se traduit par une variation de la position de chaque plateau de pression par rapport au diaphragme et/ou au plateau de réaction associé, générant une variation de l'effort de serrage du disque de friction et/ou une modification du point de léchage et de la course de la butée d'embrayage. On rappelle que le point de léchage est la position à partir de laquelle une partie du couple du moteur est transmis à l'arbre de la boîte de vitesses lors de la fermeture de l'embrayage.

Le document FR 2 847 626, au nom de la Demanderesse, propose un embrayage équipé de moyens de rattrapage d'usure interposés entre un plateau de pression et un diaphragme monté sur un couvercle fixé à un plateau de réaction. Ces moyens de rattrapage d'usure comportent un anneau à rampes circonférentielles qui coopèrent avec des contre-rampes complémentaires du plateau de pression. L'anneau à rampes sert également à l'appui du diaphragme de sorte que la rotation de l'anneau par rapport au plateau de pression entraîne le déplacement des rampes par rapport aux contre-rampes et, ainsi, le déplacement axial du plateau de pression par rapport au diaphragme, au couvercle et au plateau de réaction. On fait ainsi varier la distance entre le plateau de pression et le plateau de réaction associé, d'une façon qui compense l'usure.

Un organe denté est en outre fixé sur l'anneau à rampes et engrène avec une vis sans fin montée dans une cassette fixée au couvercle, l'organe denté étant au droit de la vis sans fin.

La vis sans fin est couplée en rotation avec une roue à rochet coopérant avec un cliquet fixé sur le couvercle. La vis sans fin et/ou la roue à rochet sont plaquées par un organe élastique contre une aile de la cassette.

Le cliquet se présente sous la forme d'une lamelle élastique présentant une languette de commande coopérant avec les dents de la roue à rochet de façon à autoriser la rotation de la roue à rochet dans un sens de rotation, en cas d'usure, et à empêcher la rotation de la roue à rochet dans le sens de rotation contraire, le diaphragme venant en appui contre une languette de rappel du cliquet, de manière à déplacer la languette de commande lors de son actionnement. Le cliquet comporte en outre des butées de contrôle destinées à venir en appui sur un couvercle fixe par rapport au plateau de réaction, lors de l'actionnement du diaphragme.

De cette manière, en cas d'usure et lors des actionnements successifs du diaphragme, le cliquet entraîne la rotation de la roue à rochet et de la vis sans fin, cette dernière entraînant la rotation de l'anneau portant les rampes, par l'intermédiaire de l'organe denté. On augmente ainsi progressivement la distance entre le plateau de pression et le couvercle et on diminue progressivement la distance entre le plateau de pression et le plateau de réaction associé, de façon à compenser l'usure.

L'invention propose un procédé consistant à positionner correctement le plateau de pression par rapport au plateau de réaction, à l'aide de tels moyens de rattrapage d'usure, aussi bien dans le cas d'une détection d'une usure du disque de friction après une certaine durée de fonctionnement de l'embrayage, qu'après assemblage en usine des différents composants de l'embrayage.

En effet, lors de l'assemblage des différents composants, il est très difficile de garantir le bon positionnement du plateau de pression par rapport au plateau de réaction et donc de garantir le bon fonctionnement de l'embrayage.

A cet effet, l'invention propose un procédé de positionnement d'un plateau de pression d'un embrayage par rapport à un plateau de réaction de l'embrayage, l'embrayage étant du type normalement ouvert et comportant un actionneur agissant sur une butée d'embrayage, agissant elle-même sur le plateau de pression par l'intermédiaire d'un dispositif de transmission de force, tel qu'un diaphragme, de façon à pincer un disque de friction entre le plateau de pression et le plateau de réaction, l'actionneur étant déplaçable dans deux sens opposés, dit respectivement sens d'embrayage et sens de débrayage, dans une zone de fonctionnement normal délimitée par une première position dans laquelle l'embrayage est débrayé et par une seconde position dite embrayée correspondant au couple maximum à transmettre par ledit embrayage, l'embrayage comportant en outre des moyens de rattrapage de jeu armés par déplacement de l'actionneur dans une troisième position située au-delà de ladite seconde position, dans le sens d'embrayage, hors de la zone de fonctionnement normal, les moyens de rattrapage de jeu étant, après armement, actionnés de façon à rapprocher le plateau de pression du plateau de réaction, par déplacement de l'actionneur dans le sens de débrayage, le procédé comportant au moins une phase de rattrapage de jeu comportant une étape consistant à déplacer l'actionneur alternativement dans les sens d'embrayage et de débrayage, en limitant la position de l'actionneur à une quatrième position située au-delà de la troisième position, dans le sens d'embrayage, et en limitant l'effort exercé par la butée ou l'effort exercé par l'actionneur à un effort maximal déterminé, de sorte que, lors de ces déplacements alternatifs, les moyens de rattrapage de jeu soient armés et actionnés de façon à rapprocher progressivement le plateau de pression du plateau de réaction, la troisième position étant déterminée de façon à ce que les moyens de rattrapage de jeu ne puissent plus être armés lorsque le plateau de pression est correctement positionné par rapport au plateau de réaction.

Selon une caractéristique de l'invention, lors du déplacement alternatif de l'actionneur dans les sens d'embrayage et de débrayage, on assure un suivi de la position d'un organe de l'embrayage, par exemple la position de l'actionneur ou de la butée d'embrayage, pour un point donné de la courbe caractéristique de l'embrayage, par exemple la position dudit organe correspondant à un effort donné exercé par la butée d'embrayage, la phase de rattrapage de jeu étant terminée lorsque cette position dudit organe pour un point donné de la courbe caractéristique ne varie plus entre deux déplacements alternatifs de l'actionneur.

De préférence, le suivi de la position dudit organe lors de la phase de rattrapage de jeu est réalisé pour un point de la courbe caractéristique correspondant à un état embrayé de l'embrayage, par exemple pour l'effort maximal exercé par la butée ou l'effort maximal exercé par l'actionneur lors de ladite phase de rattrapage de jeu.

A l'issue de la phase de rattrapage de jeu, la position d'un organe de l'embrayage peut être contrôlée, par exemple la position de la butée d'embrayage, l'embrayage étant identifié comme non conforme si ladite position dudit organe n'est pas conforme à un intervalle de positions à obtenir.

En outre, à l'issue de la phase de rattrapage de jeu, la position d'un organe de l'embrayage peut être contrôlée, un signal d'alerte étant généré pour informer de l'usure totale des garnitures, si ladite position dudit organe n'est pas conforme à un intervalle de positions à obtenir.

Avantageusement, on contrôle la position dudit organe pour un point de la courbe caractéristique correspondant à un état embrayé de l'embrayage, par exemple pour l'effort maximal exercé par la butée ou l'effort maximal exercé par l'actionneur lors de la phase de rattrapage de jeu.

Selon une autre caractéristique de l'invention, lors de l'assemblage de l'embrayage, le plateau de pression est positionné de façon à ce que son écartement par rapport au plateau de réaction soit supérieur à un écartement déterminé, une phase de rattrapage de jeu étant réalisée après assemblage, par exemple avant montage de l'embrayage sur un véhicule.

On garantit ainsi que, pour chaque embrayage sortant d'usine, le plateau de pression est correctement positionné par rapport au plateau de réaction correspondant.

De manière préférée, le procédé comporte une phase de détection d'usure de l'embrayage comportant les étapes consistant à :
- assurer le suivi de la position réelle d'un organe de l'embrayage correspondant à un point donné de la courbe caractéristique de l'embrayage, par exemple la position dudit organe correspondant à un effort donné exercé par la butée d'embrayage, à un effort donné exercé par l'actionneur ou à un couple donné transmis par l'embrayage, et comparer cette position réelle dudit organe avec une position de référence dudit organe, telle par exemple qu'une position antérieure dudit organe,
- si l'écart entre la position réelle et la position de référence dudit organe est supérieur à une valeur critique, exécuter une phase de rattrapage de jeu de façon à rattraper l'usure de l'embrayage, notamment l'usure du disque de friction, par rapprochement du plateau de pression et du plateau de réaction.

Dans ce cas, lors de la phase de détection d'usure, on peut comparer la position réelle et la position de référence dudit organe, déterminées pour des températures sensiblement identiques de l'embrayage, et/ou pour des vitesses de rotation du diaphragme sensiblement identiques.

Dans ce cas également, la phase de détection d'usure peut intervenir lors d'une phase de démarrage d'un moteur de véhicule couplé à l'embrayage ou lors d'une phase de rampage lors de laquelle le moteur couplé à l'embrayage fonctionne à une vitesse réduite.

Enfin, chaque phase de rattrapage de jeu peut être réalisée lors d'un arrêt du moteur du véhicule ou lorsque la boîte de vitesses est au point mort, si l'embrayage est couplé à un moteur.

L'invention sera mieux comprise et d'autres détails, caractéristiques et avantages de l'invention apparaîtront à la lecture de la description suivante faite à titre d'exemple non limitatif en référence aux dessins annexés dans lesquels :
- la figure 1 est un diagramme illustrant les différentes phases de fonctionnement d'un actionneur d'embrayage,
- la figure 2 est un diagramme illustrant l'effort appliqué sur une butée d'embrayage en fonction de la position de ladite butée,
- la figure 3 est un diagramme représentant une phase de rattrapage de jeu provoqué par une usure d'un disque de friction,
- la figure 4 est un diagramme représentant une phase de rattrapage de jeu après assemblage des divers composants d'un embrayage

Le procédé selon l'invention vise à positionner correctement un plateau de pression d'un embrayage par rapport à un plateau de réaction de l'embrayage.

L'embrayage est du type normalement ouvert et comporte classiquement un actionneur agissant sur une butée d'embrayage, agissant elle-même sur le plateau de pression par l'intermédiaire d'un dispositif de transmission de force, tel qu'un diaphragme annulaire, de façon à pincer un disque de friction entre le plateau de pression et le plateau de réaction.

L'actionneur peut être par exemple un actionneur hydraulique, tel qu'un vérin, ou un actionneur électromécanique, tel qu'un moteur électrique.

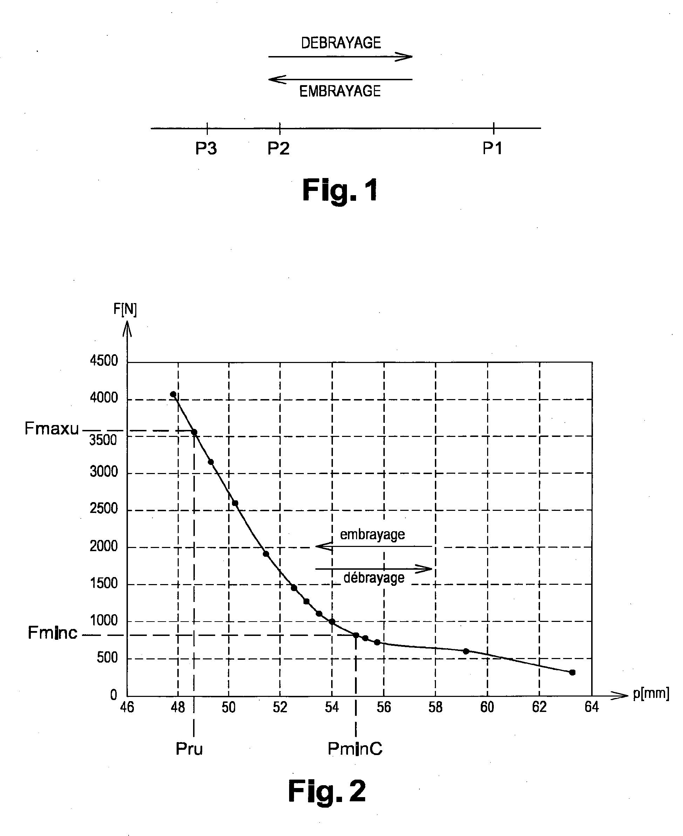

L'actionneur est déplaçable dans deux sens opposés, dit respectivement sens d'embrayage et sens de débrayage, dans une zone de fonctionnement normal délimitée par une première position P1 (figure 1) dans laquelle l'embrayage est débrayé et par une seconde position P2 dite embrayée, correspondant au couple maximum à transmettre par ledit embrayage.

Comme cela est connu de l'art antérieur, l'embrayage comporte en outre des moyens de rattrapage de jeu armés par déplacement de l'actionneur dans une troisième position P3 située au-delà de ladite seconde position P2, dans le sens d'embrayage, hors de la zone de fonctionnement normal, les moyens de rattrapage de jeu étant, après armement, actionnés de façon à rapprocher le plateau de pression du plateau de réaction, par déplacement de l'actionneur dans le sens de débrayage.

De tels moyens de rattrapage de jeu ont par exemple une structure similaire à celle des moyens présentés dans le document FR 2 847 626.

Le procédé selon l'invention s'applique plus particulièrement aux deux cas suivants.

Le premier cas est celui d'une détection d'usure, par exemple une usure des garnitures du disque de friction, après un certain temps de fonctionnement.

Le second cas est celui du positionnement du plateau de pression par rapport au plateau de pression, après assemblage des différents composants de l'embrayage.

La figure 2 est un diagramme illustrant l'effort appliqué sur la butée d'embrayage en fonction de la position de ladite butée. La courbe représentée est appelée courbe caractéristique de l'embrayage.

Sur ce diagramme est représenté l'effort Fmaxu correspondant à la position PRU de la butée d'embrayage pour laquelle les moyens de rattrapage de jeu sont armés. Le point (Fmaxu, PRU) de la courbe correspond ainsi à la troisième position P3 de l'actionneur décrite ci-dessus. Ce point doit être situé en-dehors de la zone de fonctionnement normal de l'embrayage définie par les positions embrayée et débrayée, de façon à ne pas rattraper du jeu de façon non volontaire lors du fonctionnement de l'embrayage.

Le procédé selon l'invention comporte une phase de détection d'usure de l'embrayage comportant les étapes consistant à :
- assurer le suivi de la position réelle d'un organe de l'embrayage correspondant à un point donné de la courbe caractéristique de l'embrayage, par exemple la position de la butée d'embrayage pour un effort donné exercé par la butée d'embrayage, et comparer cette position réelle dudit organe avec une position de référence dudit organe, telle par exemple qu'une position antérieure dudit organe,
- si l'écart entre la position réelle et la position de référence dudit organe est supérieur à une valeur critique, exécuter une phase de rattrapage de jeu de façon à rattraper l'usure de l'embrayage, notamment l'usure du disque de friction, par rapprochement du plateau de pression et du plateau de réaction.

Dans le cas représenté à la figure 2, il est par exemple possible de suivre la position de la butée d'embrayage PminC correspondant à un effort FminC de 800 à 820 N par exemple au niveau de la butée d'embrayage. Un tel effort de la butée d'embrayage est obtenu pour un couple transmis par l'embrayage qui est relativement faible. L'avantage d'utiliser une zone de faible couple transmis est de pouvoir mesurer un tel point dans des cas de fonctionnement relativement fréquents et donc de pouvoir mesurer régulièrement l'usure de l'embrayage.

PminC et FminC peuvent être mesurés directement ou être calculés à partir d'autres paramètres tels par exemple que le régime moteur et le couple moteur.

Comme indiqué précédemment, la position réelle et actuelle PminC est ensuite comparée à une position antérieure Pmem enregistrée dans une mémoire et si l'écart entre les deux position PminC et Pmem est trop important, on en déduit qu'une usure s'est produite. Cette situation d'usure peut être vérifiée ou confirmée en effectuant plusieurs comparaisons successives.

Les positions PminC et Pmem sont déterminées pour des températures sensiblement identiques de l'embrayage, et/ou pour des vitesses de rotation du diaphragme de l'embrayage sensiblement identiques.

Une telle phase de détection d'usure intervient préférentiellement lors d'une phase de démarrage du moteur couplé à l'embrayage ou lors d'une phase de rampage lors de laquelle le moteur couplé à l'embrayage fonctionne à une vitesse réduite.

Si l'usure de l'embrayage est confirmée, on procède alors à une phase de rattrapage lors de laquelle on déplace l'actionneur alternativement dans les sens d'embrayage et de débrayage, en limitant la position de l'actionneur à une quatrième position située au-delà de la troisième position, dans le sens d'embrayage, et en limitant l'effort exercé par la butée ou l'effort exercé par l'actionneur à un effort maximal déterminé, de sorte que, lors de ces déplacements alternatifs, les moyens de rattrapage de jeu soient armés et actionnés de façon à rapprocher progressivement le plateau de pression du plateau de réaction. La troisième position est déterminée de façon à ce que les moyens de rattrapage de jeu ne puissent plus être armés lorsque le plateau de pression est correctement positionné par rapport au plateau de réaction.

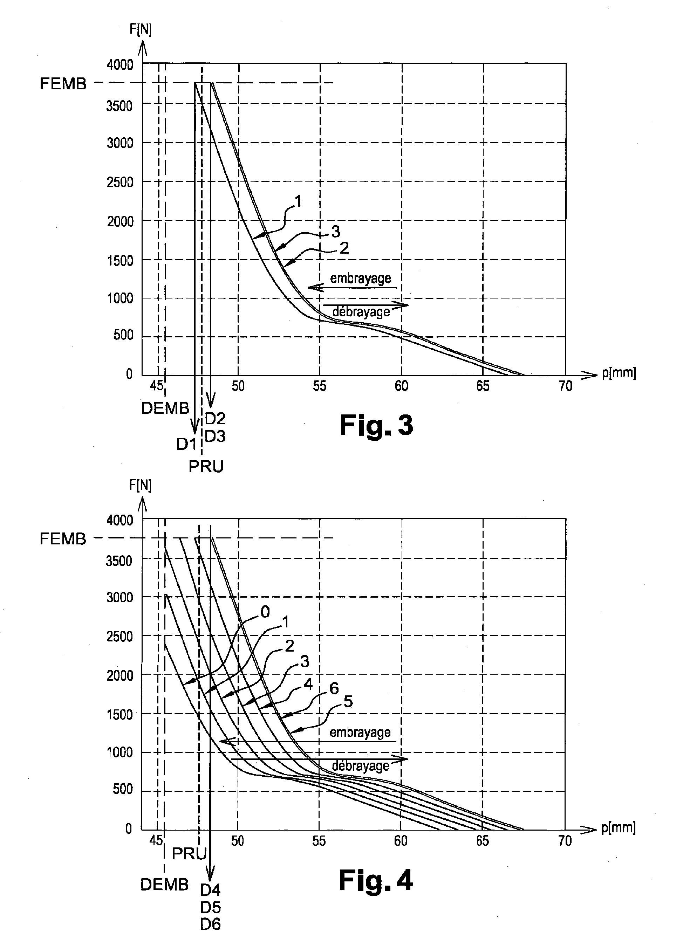

La figure 3 est un diagramme illustrant la courbe caractéristique de départ d'un embrayage usé (Courbe 1), puis les courbes caractéristiques de l'embrayage après un premier et un second déplacements alternatifs et successifs de la butée d'embrayage (Courbes 2 et 3, respectivement).

Dans ce cas, lorsque l'embrayage fonctionne conformément à sa courbe caractéristique représentée par la Courbe 1, et qu'un écart est détecté entre la valeur PminC et la valeur correspondante enregistrée en mémoire Pmem, les moyens de rattrapage de jeu sont armés puis actionnés, par déplacement alternatif de la butée d'embrayage, de sorte que le plateau de pression se rapproche du plateau de réaction correspondant. Ceci a pour effet de décaler la courbe caractéristique d'un pas vers la droite à la figure 2. La Courbe 2 représente la courbe caractéristique de l'embrayage obtenue après un seul déplacement alternatif de la butée d'embrayage.

Lors de cette phase de rattrapage de jeu, dans l'exemple de la figure 3, on limite la position de la butée d'embrayage à la position DEMB (dans le sens embrayé) et l'effort exercé par la butée d'embrayage à l'effort FEMB. La position de l'actionneur et l'effort exercé par l'actionneur sont donc également limités.

Lors de cette phase de rattrapage de jeu également, on assure un suivi de la position de la butée d'embrayage correspondant à l'effort FEMB de la courbe caractéristique correspondante. Cette position est notée Dn, où n est le numéro de la courbe correspondante.

Plusieurs déplacement alternatifs de la butée d'embrayage (et donc également de l'actionneur) peuvent ainsi se succéder. Dans cet exemple, seuls deux déplacement alternatifs de la butée d'embrayage se sont succédés.

Lorsque la position Dn de la butée d'embrayage correspondant à l'effort FEMB ne varie plus entre deux déplacements alternatifs de la butée d'embrayage, la phase de rattrapage de jeu est terminée.

En particulier, l'absence de variation de la position Dn signifie que la valeur Dn est située au-delà de la valeur PRU pour laquelle les moyens de rattrapage de jeu sont armés. En d'autres termes, en limitant l'effort exercé par la butée d'embrayage à la valeur FEMB, au fur et à mesure que le jeu est rattrapé, la courbe caractéristique est progressivement corrigée, par pas successifs, jusqu'à ce que les moyens de rattrapage de jeu ne puissent plus être armés et actionnés.

La valeur de PRU doit donc être déterminée de façon à ce que toutes les courbes situées à droite de ce point à la figure 3 soient considérées comme acceptables et qu'il ne reste plus ou presque plus d'usure à rattraper pour ces courbes.

La valeur de PRU détermine ainsi la position du plateau de pression par rapport au plateau de réaction, à l'issue d'une phase de rattrapage de jeu. La manière dont est calculée la valeur de PRU sera expliquée en détail ci-dessous.

A l'issue de la phase de rattrapage de jeu, la position Dn de la butée d'embrayage est contrôlée, l'embrayage étant identifié comme non conforme si ladite position Dn n'est pas conforme à un intervalle de positions à obtenir, un signal d'alerte étant également généré dans ce cas pour informer de l'usure totale des garnitures de disque de friction par exemple.

Chaque phase de rattrapage de jeu est réalisée lors d'un arrêt du moteur du véhicule ou lorsque la boîte de vitesses est au point mort, si l'embrayage est couplé à un moteur.

La valeur de PRU correspond à une position de l'actionneur qui se situe juste au-delà de la position P2 de l'actionneur correspondant au couple maximum transmissible par l'embrayage lorsque le plateau de pression est correctement positionné par rapport au plateau de réaction.

La figure 4 est un diagramme correspondant à celui de la figure 3 et illustrant le cas du positionnement du plateau de pression par rapport au plateau de pression, après assemblage des différents composants de l'embrayage.

Dans ce cas, lors de l'assemblage de l'embrayage, le plateau de pression est volontairement positionné de façon à ce que son écartement par rapport au plateau de réaction soit supérieur à un écartement déterminé, une phase de rattrapage de jeu étant réalisée après assemblage, par exemple avant montage de l'embrayage sur un véhicule.

Comme précédemment, lors de cette phase de rattrapage de jeu, on déplace l'actionneur alternativement dans les sens d'embrayage et de débrayage, en limitant la position de la butée d'embrayage à la valeur DEMB (dans le sens d'embrayage), et en limitant l'effort exercé par la butée d'embrayage à la valeur FEMB. De cette manière, lors de ces déplacements alternatifs, les moyens de rattrapage de jeu sont armés et actionnés de façon à rapprocher progressivement, c'est-à-dire par pas (voir Courbes 1 à 6), le plateau de pression du plateau de réaction.

Dans le cas d'une phase de rattrapage de jeu après assemblage, la valeur du jeu à rattraper est généralement plus importante que la valeur du jeu à rattraper dans le cas d'une usure en fonctionnement. En conséquence, le nombre de pas, c'est-à-dire le nombre de déplacements alternatifs de la butée d'embrayage ou de cycles d'armement et de d'actionnement des moyens de rattrapage de jeu, de la phase de rattrapage de jeu, est également plus important. Ce nombre est par exemple ici égal à 6 alors qu'il n'était que de 3 dans le cas d'une usure en fonctionnement (figure 3). Ces deux phases de rattrapage de jeu fonctionnent toutefois selon le même principe.

## Revendications

1. Procédé de positionnement d'un plateau de pression d'un embrayage par rapport à un plateau de réaction de l'embrayage,
l'embrayage étant de type normalement ouvert et comportant un actionneur agissant sur une butée d'embrayage, agissant elle-même sur le plateau de pression par l'intermédiaire d'un dispositif de transmission de force, tel qu'un diaphragme, de façon à pincer un disque de friction entre le plateau de pression et le plateau de réaction,
l'actionneur étant déplaçable dans deux sens opposés, dit respectivement sens d'embrayage et sens de débrayage, dans une zone de fonctionnement normal délimitée par une première position (P1) dans laquelle l'embrayage est débrayé et par une seconde position (P2) dite embrayée correspondant au couple maximum à transmettre par ledit embrayage,
l'embrayage comportant en outre des moyens de rattrapage de jeu armés par déplacement de l'actionneur dans une troisième position (P3) située au-delà de ladite seconde position, dans le sens d'embrayage, hors de la zone de fonctionnement normal, les moyens de rattrapage de jeu étant, après armement, actionnés de façon à rapprocher le plateau de pression du plateau de réaction, par déplacement de l'actionneur dans le sens de débrayage,
le procédé comportant au moins une phase de rattrapage de jeu comportant une étape consistant à déplacer l'actionneur alternativement dans les sens d'embrayage et de débrayage, en limitant la position de l'actionneur à une quatrième position (DEMB) située au-delà de la troisième position (P3, PRU), dans le sens d'embrayage, et en limitant l'effort exercé par la butée ou l'effort exercé par l'actionneur à un effort maximal déterminé (FEMB), de sorte que, lors de ces déplacements alternatifs, les moyens de rattrapage de jeu soient armés et actionnés de façon à rapprocher progressivement le plateau de pression du plateau de réaction, la troisième position (P3, PRU) étant déterminée de façon à ce que les moyens de rattrapage de jeu ne puissent plus être armés lorsque le plateau de pression est correctement positionné par rapport au plateau de réaction.

2. Procédé selon la revendication 1, **caractérisé en ce que**, lors du déplacement alternatif de l'actionneur dans les sens d'embrayage et de débrayage, on assure un suivi de la position d'un organe de l'embrayage, par exemple la position de l'actionneur ou de la butée d'embrayage, pour un point donné (D1 à D6) de la courbe caractéristique de l'embrayage, par exemple la position dudit organe correspondant à un effort donné (FEMB) exercé par la butée d'embrayage, la phase de rattrapage de jeu étant terminée lorsque cette position dudit organe pour un point donné de la courbe caractéristique ne varie plus entre deux déplacements alternatifs de l'actionneur.

3. Procédé selon la revendication 2, **caractérisé en ce que** le suivi de la position dudit organe lors de la phase de rattrapage de jeu est réalisé pour un point de la courbe caractéristique correspondant à un état embrayé de l'embrayage, par exemple pour l'effort maximal (FEMB) exercé par la butée ou l'effort maximal exercé par l'actionneur lors de ladite phase de rattrapage de jeu.

4. Procédé selon l'une des revendications 1 à 3, **caractérisé en ce que**, à l'issue de la phase de rattrapage de jeu, la position d'un organe de l'embrayage est contrôlée, par exemple la position de la butée d'embrayage, l'embrayage étant identifié comme non conforme si ladite position dudit organe n'est pas conforme à un intervalle de positions à obtenir.

5. Procédé selon l'une des revendications 1 à 4, **caractérisé en ce que**, à l'issue de la phase de rattrapage de jeu, la position d'un organe de l'embrayage est contrôlée, un signal d'alerte étant généré pour informer de l'usure totale des garnitures, si ladite position dudit organe n'est pas conforme à un intervalle de positions à obtenir.

6. Procédé selon la revendication 4 ou 5, **caractérisé en ce que** l'on contrôle la position dudit organe pour un point de la courbe caractéristique correspondant à un état embrayé de l'embrayage, par exemple pour l'effort maximal exercé par la butée ou l'effort maximal exercé par l'actionneur lors de la phase de rattrapage de jeu.

7. Procédé selon l'une des revendications 1 à 6, **caractérisé en ce que**, lors de l'assemblage de l'embrayage, le plateau de pression est positionné de façon à ce que son écartement par rapport au plateau de réaction soit supérieur à un écartement déterminé, une phase de rattrapage de jeu étant réalisée après assemblage, par exemple avant montage de l'embrayage sur un véhicule.

8. Procédé selon l'une des revendications 1 à 7, **caractérisé en ce qu'il** comporte une phase de détection d'usure de l'embrayage comportant les étapes consistant à :
- assurer le suivi de la position réelle (PminC) d'un organe de l'embrayage correspondant à un point donné de la courbe caractéristique de l'embrayage, par exemple la position dudit organe correspondant à un effort donné exercé par la butée d'embrayage, à un effort donné exercé par l'actionneur ou à un couple donné transmis par l'embrayage, et comparer cette position réelle dudit organe (PminC) avec une position de référence dudit organe, telle par exemple qu'une position antérieure dudit organe,
- si l'écart entre la position réelle (PminC) et la position de référence dudit organe est supérieur à une valeur critique, exécuter une phase de rattrapage de jeu de façon à rattraper l'usure de l'embrayage, notamment l'usure du disque de friction, par rapprochement du plateau de pression et du plateau de réaction.

9. Procédé selon la revendication 8, **caractérisé en ce que**, lors de la phase de détection d'usure, on compare la position réelle (PminC) et la position de référence dudit organe, déterminées pour des températures sensiblement identiques de l'embrayage, et/ou pour des vitesses de rotation du diaphragme sensiblement identiques.

10. Procédé selon la revendication 8 ou 9, **caractérisé en ce que** la phase de détection d'usure intervient lors d'une phase de démarrage d'un moteur couplé à l'embrayage ou lors d'une phase de rampage lors de laquelle le moteur couplé à l'embrayage fonctionne à une vitesse réduite.

11. Procédé selon l'une des revendications 1 à 10, **caractérisé en ce que** chaque phase de rattrapage de jeu est réalisée lors d'un arrêt du moteur ou lorsque la boîte de vitesses est au point mort, si l'embrayage est couplé à un moteur.

## Patentansprüche

1. Verfahren zur Positionierung einer Druckplatte einer Kupplung in Bezug auf eine Gegendruckplatte der Kupplung,
wobei die Kupplung vom normalerweise offenen Typ ist und ein Stellglied aufweist, das auf ein Ausrücklager einwirkt, das seinerseits über eine Kraftübertragungsvorrichtung wie etwa eine Membran auf die Druckplatte einwirkt, derart, dass eine Reibscheibe zwischen der Druckplatte und der Gegendruckplatte eingeklemmt wird,
wobei das Stellglied in zwei entgegengesetzten Richtungen, die als Einrückrichtung bzw. Ausrückrichtung bezeichnet werden, in einem Bereich des normalen Betriebs verschiebbar ist, der durch eine erste Position (P1), in welcher die Kupplung ausgerückt ist, und durch eine zweite, als eingerückte Position bezeichnete Position (P2), die einem durch die Kupplung zu übertragenden maximalen Drehmoment entspricht, begrenzt ist,
wobei die Kupplung außerdem Mittel zur Spielnachstellung aufweist, die durch Bewegung des Stellglieds in eine dritte Position (P3) in Bereitschaft versetzt werden, die sich in der Einrückrichtung jenseits der zweiten Position befindet, außerhalb des Bereichs des normalen Betriebs, wobei die Mittel zur Spielnachstellung nach Versetzung in Bereitschaft derart betätigt werden, dass sie durch Bewegung des Stellglieds in die Ausrückrichtung die Druckplatte an die Gegendruckplatte annähern,
wobei das Verfahren wenigstens eine Phase der Spielnachstellung aufweist, die einen Schritt aufweist, der darin besteht, das Stellglied abwechselnd in die Einrückrichtung und die Ausrückrichtung zu bewegen, unter Begrenzung der Position des Stellglieds auf eine vierte Position (DEMB), die sich in der Einrückrichtung jenseits der dritten Position (P3, PRU) befindet, und unter Begrenzung der durch das Lager ausgeübten Kraft oder der durch das Stellglied ausgeübten Kraft auf eine bestimmte maximale Kraft (FEMB), derart, dass bei diesen Hin- und Herbewegungen die Mittel zur Spielnachstellung in Bereitschaft versetzt und derart betätigt werden, dass die Druckplatte schrittweise an die Gegendruckplatte angenähert wird, wobei die dritte Position (P3, PRU) derart bestimmt wird, dass die Mittel zur Spielnachstellung nicht mehr in Bereitschaft versetzt werden können, wenn die Druckplatte in Bezug auf die Gegendruckplatte richtig positioniert ist.

2. Verfahren nach Anspruch 1, **dadurch gekennzeichnet, dass** bei der Hin- und Herbewegung des Stellglieds in die Einrückrichtung und die Ausrückrichtung eine Überwachung der Position eines Organs der Kupplung, zum Beispiel der Position des Stellglieds oder des Ausrücklagers, für einen gegebenen Punkt (D1 bis D6) der Kennlinie der Kupplung sichergestellt wird, zum Beispiel der Position dieses Organs, die einer gegebenen Kraft (FEMB) entspricht, die von dem Ausrücklager ausgeübt wird, wobei die Phase der Spielnachstellung beendet wird, wenn sich diese Position des Organs für einen gegebenen Punkt der Kennlinie zwischen zwei Hin- und Herbewegungen des Stellglieds nicht mehr ändert.

3. Verfahren nach Anspruch 2, **dadurch gekennzeichnet, dass** die Überwachung der Position des Organs während der Phase der Spielnachstellung für einen Punkt der Kennlinie durchgeführt wird, der einem eingerückten Zustand der Kupplung entspricht, zum Beispiel für die von dem Lager ausgeübte maximale Kraft (FEMB) oder die von dem Stellglied ausgeübte maximale Kraft während der Phase der Spielnachstellung.

4. Verfahren nach einem der Ansprüche 1 bis 3, **dadurch gekennzeichnet, dass** am Ende der Phase der Spielnachstellung die Position eines Organs der Kupplung kontrolliert wird, zum Beispiel die Position des Ausrücklagers, wobei die Kupplung als nicht konform identifiziert wird, wenn die Position dieses Organs nicht mit einem Intervall von zu erzielenden Positionen konform ist.

5. Verfahren nach einem der Ansprüche 1 bis 4, **dadurch gekennzeichnet, dass** am Ende der Phase der Spielnachstellung die Position eines Organs der Kupplung kontrolliert wird, wobei ein Alarmsignal erzeugt wird, um über den vollständigen Verschleiß der Beläge zu informieren, falls die Position dieses Organs nicht mit einem Intervall von zu erzielenden Positionen konform ist.

6. Verfahren nach Anspruch 4 oder 5, **dadurch gekennzeichnet, dass** die Position des Organs für einen Punkt der Kennlinie kontrolliert wird, der einem eingerückten Zustand der Kupplung entspricht, zum Beispiel für die von dem Lager ausgeübte maximale Kraft oder die von dem Stellglied ausgeübte maximale Kraft während der Phase der Spielnachstellung.

7. Verfahren nach einem der Ansprüche 1 bis 6, **dadurch gekennzeichnet, dass** beim Zusammenbau der Kupplung die Druckplatte derart positioniert wird, dass ihr Abstand in Bezug auf die Gegendruckplatte größer als ein bestimmter Abstand ist, wobei eine Phase der Spielnachstellung nach dem Zusammenbau durchgeführt wird, zum Beispiel vor der Montage der Kupplung am Fahrzeug.

8. Verfahren nach einem der Ansprüche 1 bis 7, **dadurch gekennzeichnet, dass** es eine Phase der Erkennung von Verschleiß der Kupplung aufweist, welche die Schritte aufweist, die in Folgendem bestehen:
- Sicherstellen der Verfolgung der tatsächlichen Position (PminC) eines Organs der Kupplung, die einem gegebenen Punkt der Kennlinie der Kupplung entspricht, zum Beispiel der Position dieses Organs, die einer gegebenen Kraft, die von dem Ausrücklager ausgeübt wird, einer gegebenen Kraft, die von dem Stellglied ausgeübt wird, oder einem gegebenen Drehmoment, das von der Kupplung übertragen wird, entspricht, und Vergleichen dieser tatsächlichen Position dieses Organs (PminC) mit einer Bezugsposition dieses Organs, wie zum Beispiel einer früheren Position dieses Organs,
- falls die Abweichung zwischen der tatsächlichen Position (PminC) und der Bezugsposition dieses Organs größer als ein kritischer Wert ist, Ausführen einer Phase der Spielnachstellung, derart, dass der Verschleiß der Kupplung, insbesondere der Verschleiß der Reibscheibe, durch Annäherung der Druckplatte und der Gegendruckplatte ausgeglichen wird.

9. Verfahren nach Anspruch 8, **dadurch gekennzeichnet, dass** während der Phase der Erkennung von Verschleiß die tatsächliche Position (PminC) und die Bezugsposition dieses Organs verglichen werden, die für im Wesentlichen identische Temperaturen der Kupplung und/oder für im Wesentlichen identische Drehzahlen der Membran bestimmt wurden.

10. Verfahren nach Anspruch 8 oder 9, **dadurch gekennzeichnet, dass** die Phase der Erkennung von Verschleiß während einer Phase des Anlassens eines mit der Kupplung gekoppelten Motors oder während einer Phase des Schleichens, während der der mit der Kupplung gekoppelte Motor mit verminderter Drehzahl arbeitet, stattfindet.

11. Verfahren nach einem der Ansprüche 1 bis 10, **dadurch gekennzeichnet, dass** jede Phase der Spielnachstellung während eines Stillstands des Motors durchgeführt wird, oder wenn sich das Getriebe am Totpunkt befindet, falls die Kupplung mit einem Motor gekoppelt ist.

## Claims

1. Method of positioning a pressure plate of a clutch with respect to a reaction plate of the clutch, the clutch being of the normally open type and comprising an actuator acting on a clutch release bearing, itself acting on the pressure plate via a force transmission device, such as a diaphragm, so as to clamp a friction disc between the pressure plate and the reaction plate,
the actuator being movable in two opposite directions, respectively termed engagement direction and disengagement direction, in a normal operating zone delimited by a first position (P1) in which the clutch is disengaged and by a second position (P2), termed engaged position, corresponding to the maximum torque to be transmitted by the said clutch,
the clutch additionally comprising clearance compensation means primed by movement of the actuator into a third position (P3) situated beyond the said second position, in the engagement direction, outside the normal operating zone, the clearance compensation means being, after priming, actuated so as to move the pressure plate towards the reaction plate, by movement of the actuator in the disengagement direction,
the method comprising at least one clearance compensation phase comprising a step consisting in moving the actuator alternately in the engagement and disengagement directions, while limiting the position of the actuator to a fourth position (DEMB) situated beyond the third position (P3, PRU), in the engagement direction, and while limiting the force exerted by the release bearing or the force exerted by the actuator to a defined maximum force (FEMB), with the result that, during these alternating movements, the clearance compensation means are primed and actuated so as to move the pressure plate progressively towards the reaction plate, the third position (P3, PRU) being defined in such a way that the clearance compensation means can no longer be primed when the pressure plate is correctly positioned with respect to the reaction plate.

2. Method according to Claim 1, **characterized in that**, during the alternating movement of the actuator in the engagement and disengagement directions, the position of a member of the clutch, for example the position of the actuator or of the clutch release bearing, is monitored for a given point (D1 to D6) of the characteristic curve of the clutch, for example the position of the said member corresponding to a given force (FEMB) exerted by the clutch release bearing, the clearance compensation phase being terminated when this position of the said member for a given point of the characteristic curve no longer varies between two alternating movements of the actuator.

3. Method according to Claim 2, **characterized in that** the position of the said member during the clearance compensation phase is monitored for a point of the characteristic curve corresponding to an engaged state of the clutch, for example for the maximum force (FEMB) exerted by the release bearing or the maximum force exerted by the actuator during the said clearance compensation phase.

4. Method according to one of Claims 1 to 3, **characterized in that**, on completion of the clearance compensation phase, the position of a member of the clutch is checked, for example the position of the clutch release bearing, the clutch being identified as non-compliant if the said position of the said member does not comply with a range of positions to be obtained.

5. Method according to one of Claims 1 to 4, **characterized in that**, on completion of the clearance compensation phase, the position of a member of the clutch is checked, an alert signal being generated to indicate the total wear of the linings if the said position of the said member does not comply with a range of positions to be obtained.

6. Method according to Claim 4 or 5, **characterized in that** the position of the said member is checked for a point of the characteristic curve corresponding to an engaged state of the clutch, for example for the maximum force exerted by the release bearing or the maximum force exerted by the actuator during the clearance compensation phase.

7. Method according to one of Claims 1 to 6, **characterized in that**, during the assembly of the clutch, the pressure plate is positioned in such a way that its spacing with respect to the reaction plate is greater than a defined spacing, a clearance compensation phase being carried out after assembly, for example before mounting the clutch on a vehicle.

8. Method according to one of Claims 1 to 7, **characterized in that** it comprises a phase of detecting wear of the clutch comprising the steps consisting in:
- monitoring the actual position (PminC) of a member of the clutch corresponding to a given point of the characteristic curve of the clutch, for example the position of the said member corresponding to a given force exerted by the clutch release bearing, to a given force exerted by the actuator or to a given torque transmitted by the clutch, and comparing this actual position of the said member (PminC) with a reference position of the said member, such as, for example, a previous position of the said member,
- if the difference between the actual position (PminC) and the reference position of the said member is greater than a critical value, carrying out a clearance compensation phase so as to compensate for the wear of the clutch, in particular the wear of the friction disc, by moving the pressure plate and the reaction plate towards one another.

9. Method according to Claim 8, **characterized in that**, during the wear detection phase, the actual position (PminC) and the reference position of the said member are compared, which positions are determined for substantially identical temperatures of the clutch, and/or for substantially identical rotational speeds of the diaphragm.

10. Method according to Claim 8 or 9, **characterized in that** the wear detection phase occurs during a start-up phase of an engine coupled to the clutch or during a ramping phase during which the engine coupled to the clutch operates at a reduced speed.

11. Method according to one of Claims 1 to 10, **characterized in that** each clearance compensation phase is carried out during a stopping of the engine or when the gearbox is in neutral if the clutch is coupled to an engine.
